# EUROPEAN PATENT APPLICATION

(11) **EP 4 693 087 A1**
(43) Date of publication of application: **11.02.2026**
(21) Application number: 24806161.6
(22) Date of filing: 12.03.2024
(51) Int. Cl.: G06F 21/71, G06F 21/53, G06F 21/62

(54) **DEVICE ACCESS METHOD AND APPARATUS**

(30) Priority: 16.05.2023 CN 202310551446
(71) Applicant: Huawei Technologies Co., Ltd., Shenzhen, Guangdong 518129 (CN)
(72) Inventor: WANG, Chenyu, Shenzhen, Guangdong 518129 (CN); YUAN, Jinfeng, Shenzhen, Guangdong 518129 (CN); ZHENG, Ziyong, Shenzhen, Guangdong 518129 (CN)
(74) Representative: Pfenning, Meinig & Partner mbB
(86) International application number: PCT/CN2024/081130
(87) International publication number: WO 2024/234801

(57) **Abstract**

Embodiments of this application provide a device access method and apparatus. The method is applied to a first device. The first device includes a secure world and a non-secure world. The method includes: The first device receives first request information sent by a server, where the first request information is used to request the first device to determine a first memory address, and the first memory address corresponds to a first MMIO address in a secure world of the server; and the first device determines the first memory address in the secure world of the first device based on the first request information. According to the foregoing method, a data channel established between the server and the first device cannot be stolen by software in the non-secure world, so that a confidential computing requirement of a tenant in a heterogeneous computing architecture scenario is met.

## Description

This application claims priority to Chinese Patent Application No. 202310551446.2, filed with the China National Intellectual Property Administration on May 16, 2023 and entitled "DEVICE ACCESS METHOD AND APPARATUS", which is incorporated herein by reference in its entirety.

### TECHNICAL FIELD

Embodiments of this application relate to the field of cloud computing, and more specifically, to a device access method and apparatus.

### BACKGROUND

A virtualization technology is a mainstream technology on a current cloud computing platform. Through virtualization, a tenant may deploy a plurality of computing instances (for example, virtual machines) on a cloud computing platform, and use hardware resources in a time-sharing manner. In a current virtualization technology framework, a virtual machine management module (virtual machine manager, VMM) manages all memory resources, that is, the VMM may access code and data of all virtual machines of the tenant. When the tenant deploys a cloud computing service on the cloud platform, a cloud service provider may obtain tenant data by inserting malicious code into the VMM. To prevent the foregoing case, a confidential computing technology emerges.

The confidential computing technology is a computing mode that builds an encrypted, isolated, and provable computing environment based on trusted hardware in combination with firmware and software to ensure data confidentiality and integrity, code integrity, and computing process confidentiality in the environment. Currently, a confidential computing environment is a confidential computing architecture centered on a central processing unit (central processing unit, CPU), that is, all computing processes of confidential data are completed in the CPU, and a final computing result is returned. Although this confidential computing architecture can better protect data security of a tenant, this confidential computing architecture cannot meet a confidential computing requirement of the tenant in a heterogeneous computing architecture scenario. In addition, the confidential computing architecture needs to be improved in terms of computing security, working efficiency, usability, and the like.

### SUMMARY

Embodiments of this application provide a device access method and apparatus, to meet a confidential computing requirement of a tenant in a heterogeneous computing architecture scenario.

According to a first aspect, a memory access method is provided. The method is applied to a first device. The first device includes a secure world and a non-secure world. The method includes: The first device receives first request information sent by a server, where the first request information is used to request the first device to determine a first memory address, and the first memory address corresponds to a first memory mapped input/output MMIO address in a secure world of the server; and the first device determines the first memory address in the secure world of the first device based on the first request information.

Optionally, the first memory address may be a memory address at a granularity of a physical page, or the first memory address may be a memory address at a granularity of a physical memory segment.

It should be understood that the secure world may also be referred to as a confidential domain or a trusted execution environment in this application, and the non-secure world may also be referred to as a common domain or a non-trusted execution environment in this application. The first device may be referred to as a confidential device or a heterogeneous device (device) in this application, and the server may be referred to as a host (host) in this application.

In this embodiment of this application, the first device may obtain the first memory address through assignment based on the first request information, to facilitate access by the server to the first memory address by using the first MMIO address. In this way, a data channel established between the server and the first device cannot be stolen by software in the non-secure world, so that a confidential computing requirement of a tenant in a heterogeneous computing architecture scenario is met.

With reference to the first aspect, in some implementations of the first aspect, that the first device determines the first memory address in the secure world of the first device based on the first request information includes: The first device assigns a second memory address in the non-secure world of the first device as the first memory address based on the first request information.

Optionally, the first memory address and the second memory address may be the same memory address, but security attributes of the first memory address and the second memory address are different.

Optionally, assigning the second memory address in the non-secure world of the first device as the first memory address may also be understood as follows: The first device assigns a memory attribute of the second memory address as secure, and sets a corresponding page table.

In this embodiment of this application, the first device may assign the second memory address in the non-secure world of the first device as the first memory address based on an indication of the first request information, to facilitate access by the server to the first memory address based on the first MMIO address.

With reference to the first aspect, in some implementations of the first aspect, the first memory address is the memory address at the granularity of the physical memory segment, and before the first device assigns the second memory address in the non-secure world of the first device as the first memory address based on the first request information, the method further includes: The first device partitions a memory of the first device in a fixed memory partitioning manner, to obtain the second memory address.

For example, when the memory of the first device has a total of 64 GB, the first device may partition the memory in the fixed memory partitioning manner (for example, 8 GB, 16 GB, or 32 GB), and the first device may grant the partitioned memory based on the indication of the first request information. For example, the first request information requests the first device to grant a right to use an 8 GB memory to the secure world of the first device. The first device may partition a 64 GB memory on a per-8 GB basis, and one 8 GB memory obtained through partitioning is granted to the secure world of the first device for use. Before the 8 GB memory obtained through partitioning is granted to the secure world of the first device for use, an address corresponding to the 8 GB memory obtained through partitioning may be referred to as the second memory address; and after the 8 GB memory obtained through partitioning is granted to the secure world of the first device for use, the address corresponding to the 8 GB memory obtained through partitioning may be referred to as the first memory address.

In this embodiment of this application, the first device may obtain the second memory address through partitioning in the fixed memory partitioning manner. In this way, the first device can simply and efficiently obtain the first memory address through assignment, to reduce costs and power consumption of confidential computing in a heterogeneous computing architecture.

With reference to the first aspect, in some implementations of the first aspect, that the first device determines the first memory address in the secure world of the first device based on the first request information includes: The first device checks validity of the first request information; and when the first request information is valid, the first device determines the first memory address based on the first request information.

Optionally, that the first device checks the validity of the first request information includes: The first device checks whether the second memory address has been used by the secure world of the first device. When the second memory address is not used by the secure world of the first device, it is determined that the first request information is valid; otherwise, it is determined that the first request information is invalid.

In this embodiment of this application, the first device may check the validity of the first request information before determining the first memory address. In this way, the first request information can be prevented from being tampered with, and security of access by the server to the first memory address by using the first MMIO address is ensured.

With reference to the first aspect, in some implementations of the first aspect, the method further includes: The first device receives second request information sent by the server, where the second request information is used to request the first device to assign one or more accelerators to the secure world of the first device; and the first device assigns the one or more accelerators in the non-secure world of the first device to the secure world of the first device based on the second request information.

Optionally, the first device may assign the one or more accelerators to the secure world of the first device according to a preset rule. For example, the first device includes eight accelerators. The first device may assign, based on an indication of the second request information, one, two, or four of the eight accelerators to the secure world of the first device for use.

Optionally, before the one or more accelerators are assigned to the secure world of the first device, the one or more accelerators may be located in the non-secure world of the first device.

It should be understood that an accelerator may also be referred to as a heterogeneous accelerator in this application. The heterogeneous accelerator may be configured to perform cyclic computing on a part that is of a CPU in the server or the first device and that consumes resources, to save computing resources of the CPU.

In this embodiment of this application, the first device may assign, based on the second request information, the one or more accelerators to the secure world of the first device for use, to facilitate access by the server to the one or more accelerators based on the first MMIO address.

With reference to the first aspect, in some implementations of the first aspect, that the first device assigns the one or more accelerators in the non-secure world of the first device to the secure world of the first device based on the second request information includes: The first device checks validity of the second request information; and when the second request information is valid, the first device assigns the one or more accelerators in the non-secure world of the first device to the secure world of the first device based on the second request information.

Optionally, that the first device checks the validity of the second request information includes: The first device checks whether the one or more accelerators assigned this time have been used by the secure world of the first device; when the one or more accelerators have been used by the secure world of the first device, it is determined that the second request information is invalid; otherwise, it may be determined that the second request information is valid.

In this embodiment of this application, before assigning the one or more accelerators to the secure world of the first device, the first device may check the validity of the second request information, to ensure security of the assigned one or more accelerators.

With reference to the first aspect, in some implementations of the first aspect, the method further includes: The first device and the server agree on a session key according to a key agreement protocol, where the session key is used to encrypt or decrypt communication data between the server and the first device; and the first device stores the session key.

In this embodiment of this application, the first device may store the session key, so that the first device encrypts or decrypts the communication data between the first device and the server by using the session key. In this way, security of communication between the server and the first device can be further ensured, so that a confidential computing requirement of a tenant in a heterogeneous computing architecture scenario is met.

According to a second aspect, a device access method is provided. The method is applied to a server. The server includes a secure world and a non-secure world. The method includes: The server determines a first MMIO address in the secure world of the server; the server sends first request information to a first device, where the first request information is used to request the first device to determine a first memory address in a secure world of the first device, and the first memory address corresponds to the first MMIO address; and the server accesses the first memory address by using the first MMIO address.

Optionally, after receiving a response message indicating that the first device obtains the first memory address through assignment, the server may access the first memory address by using the first MMIO address.

In this embodiment of this application, the server may send the first request information to the first device, to request the first device to obtain the first memory address through assignment, and the server may access the first memory address by using the first MMIO address. In this way, a data channel established between the server and the first device cannot be stolen by software in the non-secure world, so that a confidential computing requirement of a tenant in a heterogeneous computing architecture scenario can be met.

With reference to the second aspect, in some implementations of the second aspect, the method further includes: The server sends second request information to the first device, where the second request information is used to request the first device to assign one or more accelerators to the secure world of the first device; and the server accesses the one or more accelerators by using the first MMIO address.

Optionally, after receiving a response message that is sent by the first device and that indicates that the one or more accelerators are assigned, the server may access the one or more accelerators by using the first MMIO address.

In this embodiment of this application, the server may send the second request information to the first device, to request the first device to assign the one or more accelerators. The server may access the one or more accelerators based on the first MMIO address, so that the server delivers a confidential computing task to the one or more accelerators.

With reference to the second aspect, in some implementations of the second aspect, that the server determines the first MMIO address includes: The server assigns a second MMIO address in the non-secure world of the server as the first MMIO address.

Optionally, the first MMIO address and the second MMIO address may be the same memory address, but security attributes of the first MMIO address and the second MMIO address are different.

With reference to the second aspect, in some implementations of the second aspect, the method further includes: The server and the first device agree on a session key according to a key agreement protocol, where the session key is used to encrypt or decrypt communication data between the server and the first device; and the server stores the session key.

In this embodiment of this application, the server may store the session key, so that the server encrypts or decrypts the communication data between the first device and the server by using the session key. In this way, security of communication between the server and the first device can be further ensured, so that a confidential computing requirement of a tenant in a heterogeneous computing architecture scenario is met.

With reference to the second aspect, in some implementations of the second aspect, the first memory address is a memory address at a granularity of a physical page, or the first memory address is a memory address at a granularity of a physical memory segment.

According to a third aspect, a device access apparatus is provided. The apparatus is used in a first device. The first device includes a secure world and a non-secure world. The apparatus includes a transceiver module and a processing module. The transceiver module is configured to receive first request information sent by a server, where the first request information is used to request the first device to determine a first memory address, and the first memory address corresponds to a first MMIO address in a secure world of the server; and the processing module is configured to determine the first memory address in the secure world of the first device based on the first request information.

With reference to the third aspect, in some implementations of the third aspect, the processing module is specifically configured to assign a second memory address in the non-secure world of the first device as the first memory address based on the first request information.

With reference to the third aspect, in some implementations of the third aspect, the first memory address is a memory address at a granularity of a physical memory segment; and the processing module is further configured to partition a memory of the first device in a fixed memory partitioning manner, to obtain the second memory address.

With reference to the third aspect, in some implementations of the third aspect, the processing module is specifically configured to: check validity of the first request information; and when the first request information is valid, assign the second memory address in the non-secure world of the first device as the first memory address based on the first request information.

With reference to the third aspect, in some implementations of the third aspect, the transceiver module is further configured to receive second request information sent by the server, where the second request information is used to request the first device to assign one or more accelerators to the secure world of the first device; and the processing module is further configured to assign the one or more accelerators in the non-secure world of the first device to the secure world of the first device based on the second request information.

With reference to the third aspect, in some implementations of the third aspect, the processing module is specifically configured to: check validity of the second request information; and when the second request information is valid, assign the one or more accelerators in the non-secure world of the first device to the secure world of the first device based on the second request information.

With reference to the third aspect, in some implementations of the third aspect, the processing module is further configured to: agree on a session key with the server according to a key agreement protocol, where the session key is used to encrypt or decrypt communication data between the server and the first device; and store the session key.

According to a fourth aspect, a device access apparatus is provided. The apparatus is used in a first device. The first device includes a secure world and a non-secure world. The apparatus includes a transceiver module and a processing module. The transceiver module is configured to receive first request information sent by a server, where the first request information is used to request the first device to determine a first memory address, and the first memory address corresponds to a first MMIO address in a secure world of the server. The processing module is configured to determine the first memory address in the secure world of the first device based on the first request information.

With reference to the fourth aspect, in some implementations of the fourth aspect, the transceiver module is further configured to send second request information to the first device, where the second request information is used to request the first device to assign one or more accelerators to the secure world of the first device; and the processing module accesses the one or more accelerators by using the first MMIO address.

With reference to the fourth aspect, in some implementations of the fourth aspect, the processing module is specifically configured to assign a second MMIO address in a non-secure world of the server as the first MMIO address.

With reference to the fourth aspect, in some implementations of the fourth aspect, the processing module is further configured to: agree on a session key with the first device according to a key agreement protocol, where the session key is used to encrypt or decrypt communication data between the server and the first device; and store the session key.

According to a fifth aspect, an embodiment of this application provides a device access apparatus. The apparatus includes a processor. The processor is configured to: be coupled to a storage, and read and execute instructions and/or program code in the storage, to perform the method in the first aspect and the implementations of the first aspect or the method in the second aspect and the implementations of the second aspect.

According to a sixth aspect, an embodiment of this application provides a chip system. The chip system includes a logic circuit. The logic circuit is configured to: be coupled to an input/output interface, and transmit data through the input/output interface, to perform the method in the first aspect and the implementations of the first aspect or the method in the second aspect and the implementations of the second aspect.

According to a seventh aspect, an embodiment of this application provides a computer-readable storage medium. The computer-readable storage medium stores program code. When the computer storage medium is run on a computer, the computer is enabled to perform the method according to the first aspect and the implementations of the first aspect or the method according to the second aspect and the implementations of the second aspect.

According to an eighth aspect, an embodiment of this application provides a computer program product. The computer program product includes computer program code. When the computer program code is run on a computer, the computer is enabled to perform the method in the first aspect and the implementations of the first aspect or the method in the second aspect and the implementations of the second aspect.

### BRIEF DESCRIPTION OF DRAWINGS

FIG. 1 is a diagram of a virtualization technology framework according to an embodiment of this application;
FIG. 2 is a diagram of another virtualization technology framework according to an embodiment of this application;
FIG. 3 shows a grant mechanism-based confidential computing architecture according to an embodiment of this application;
FIG. 4 shows a requester-responder model according to an embodiment of this application;
FIG. 5 shows a system architecture to which a device access method is applicable according to an embodiment of this application;
FIG. 6 shows a device access method according to an embodiment of this application;
FIG. 7 shows another system architecture to which a device access method is applicable according to an embodiment of this application;
FIG. 8 shows another device access method according to an embodiment of this application;
FIG. 9 shows a system architecture to which a computing environment destruction method is applicable according to an embodiment of this application;
FIG. 10 shows a confidential computing environment destruction method according to an embodiment of this application;
FIG. 11 is a diagram of deploying a control CPU, supporting a grant mechanism, in a heterogeneous device according to an embodiment of this application;
FIG. 12 shows a process of building a heterogeneous confidential computing environment according to an embodiment of this application;
FIG. 13 is a diagram of deploying simple assignment logic in a heterogeneous device according to an embodiment of this application;
FIG. 14 shows a process of building another heterogeneous confidential computing environment according to an embodiment of this application;
FIG. 15 is a diagram of an example of a structure of a device access apparatus according to an embodiment of this application;
FIG. 16 is a diagram of an example of a structure of another device access apparatus according to an embodiment of this application; and
FIG. 17 is a diagram of an example of a computer program product according to an embodiment of this application.

### DESCRIPTION OF EMBODIMENTS

The following describes technical solutions of embodiments in this application with reference to accompanying drawings.

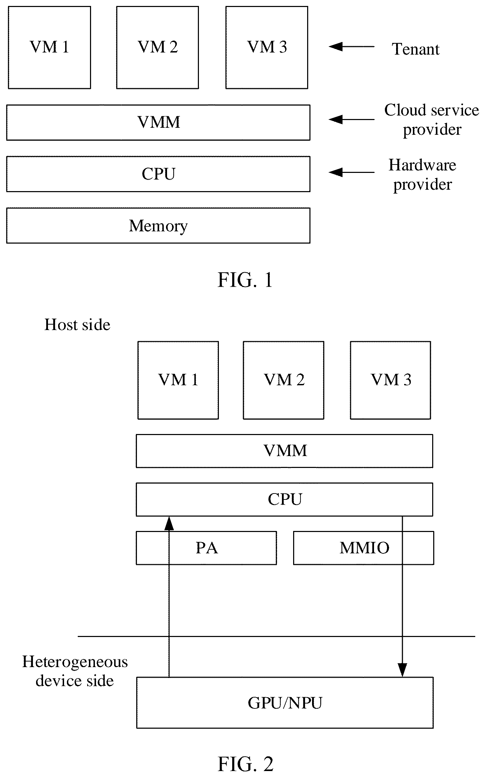

A virtualization technology is a mainstream technology on a current cloud computing platform. Through virtualization, a tenant may deploy a plurality of computing instances (for example, virtual machines) on a cloud platform, and use hardware resources in a time-sharing manner. As shown in FIG. 1, in a virtualization technology framework, a tenant provides a computing service, a cloud service provider provides VMM software, a hardware provider provides a CPU that supports a virtualization function, and the VMM provides functions such as resource management and dynamic scheduling for an upper-layer virtual machine by using a virtualization support provided by the CPU. For example, the VMM may configure different access permission control tables for different virtual machines to access a memory, so that a virtual machine cannot access a memory resource of another virtual machine when permission is not granted to the virtual machine.

Confidential computing is a computing mode that builds an encrypted, isolated, and provable computing environment based on trusted hardware in combination with firmware and software to ensure data confidentiality and integrity, code integrity, and computing process confidentiality in an environment. Confidential computing is required because the tenant does not trust VMM software. In a current virtualization technology framework, the VMM manages all memory resources, that is, the VMM can access code and data of all virtual machines of the tenant. When a tenant deploys a cloud computing service on a cloud platform, a cloud service provider may obtain tenant data by inserting malicious code into the VMM. Confidential computing isolates a general computing environment from a confidential computing environment by using an isolation mechanism. An application without granted permission cannot access the confidential computing environment. Confidential computing can verify an application run in the confidential computing environment through remote attestation to ensure integrity and validity of the application. In addition, an encryption mechanism is used to ensure that computing in the memory is encrypted, to prevent snooping from privileged software or even hardware.

The confidential computing technology is based on a trusted execution environment (trusted execution environment, TEE) of a hardware architecture. A hardware isolation mechanism ensures that code and data run in the TEE cannot be accessed or tampered with by untrusted code. Compared with another privacy technology, confidential computing has advantages of security, universality, and efficiency. Confidential computing can seamlessly support general-purpose computing frameworks and applications, and has computing performance comparable to that of plaintext computing. Confidential computing can be independently used to protect data in a computing state or may be combined with another technology to protect data. Confidential computing is an important technical means, especially for scenarios related to big data, high performance, and general-purpose privacy computing, such as secure and trusted cloud computing, large-scale data confidentiality collaboration, and deep learning for privacy protection.

In addition, an artificial intelligence (artificial intelligence, AI) technology, represented by machine learning and a deep neural network, has a computational characteristic of parallel computation of large-scale data. In terms of a hardware architecture, AI computing is more applicable to a heterogeneous computing architecture such as a graphics processing unit (graphics processing unit, GPU) or a neural network processing unit (neural network processing unit, NPU). An architecture of a heterogeneous computing unit such as GPU/NPU is characterized by high bandwidth and high concurrency, and is applicable to simple computing logic, such as matrix computing. Compared with an architecture of the CPU, the GPU/NPU is characterized by a strong computing capability and a weak control capability (condition determining and prediction execution). Therefore, current heterogeneous computing is characterized in that a CPU side analyzes a computing task by using control logic, splits the computing task into a single computing task, and then delivers the computing task to the GPU/NPU to complete computing, and then the CPU combines computing results and returns a final computing result. As shown in FIG. 2, a confidential virtual machine (which may also be referred to as a confidential virtual machine) on a server (host) side delivers instructions and distributes data to a heterogeneous device (device) by using a memory mapped input/output (memory mapped input and output, MMIO) address. System software may access the heterogeneous device in a same way as accessing a memory. In addition, after completing heterogeneous computing, the heterogeneous device writes data back to physical address memory space, and notifies a CPU on the host side. After receiving a notification, the CPU on the host side may read the data from the memory space. Both MMIO address space and the physical address memory space are parts of address space that can be accessed by the CPU. The MMIO address space represents access space of a heterogeneous device, and the physical address space represents access space of a dynamic random access memory (dynamic random access memory, DRAM).

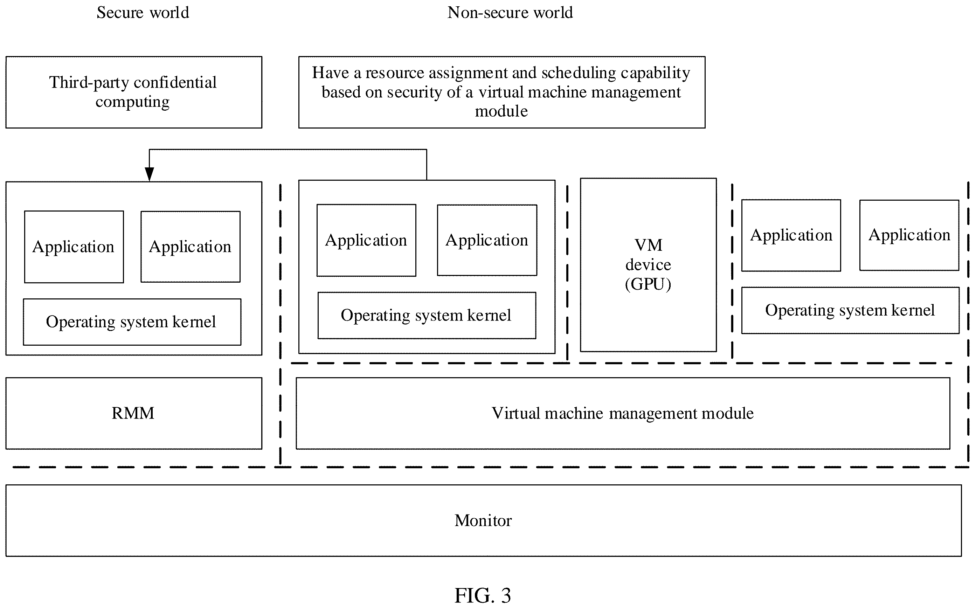

FIG. 3 shows a grant mechanism-based confidential computing architecture according to an embodiment of this application.

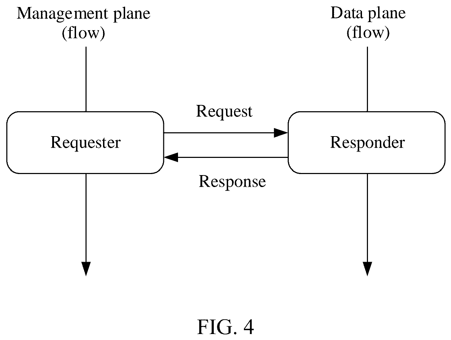

The architecture shown in FIG. 3 includes a secure world and a non-secure world. As shown in FIG. 4, the architecture is based on a requester-responder model. A requester (that is, a virtual machine management module in the non-secure world in FIG. 3) initiates a memory space grant request, to grant a right to use memory space in the non-secure world to the secure world. A responder (namely, an RMM in the secure world in FIG. 3) checks validity of the request, and performs a subsequent operation when validity check succeeds. A confidential virtual machine built in the secure world may access confidential data through a page table entry constructed by the RMM. In addition, because the memory space is granted to the secure world, malware in the non-secure world cannot steal the confidential data in a memory. An advantage of this grant mechanism is that the responder in the secure world only needs to check the validity of the request. Original management logic, such as virtual machine scheduling and page fault, can reuse existing code to the maximum extent and meet a data protection requirement of confidential computing.

However, development of a heterogeneous computing architecture poses a new challenge to the foregoing confidential computing architecture centered on a CPU. This confidential computing architecture cannot meet a confidential computing requirement of a tenant in a heterogeneous computing architecture scenario. In addition, this confidential computing architecture needs to be improved in terms of computing security, working efficiency, usability, and the like.

Embodiments of this application provide a device access method to build a confidential computing environment in a heterogeneous scenario and meet a confidential computing requirement of a tenant in a heterogeneous computing scenario.

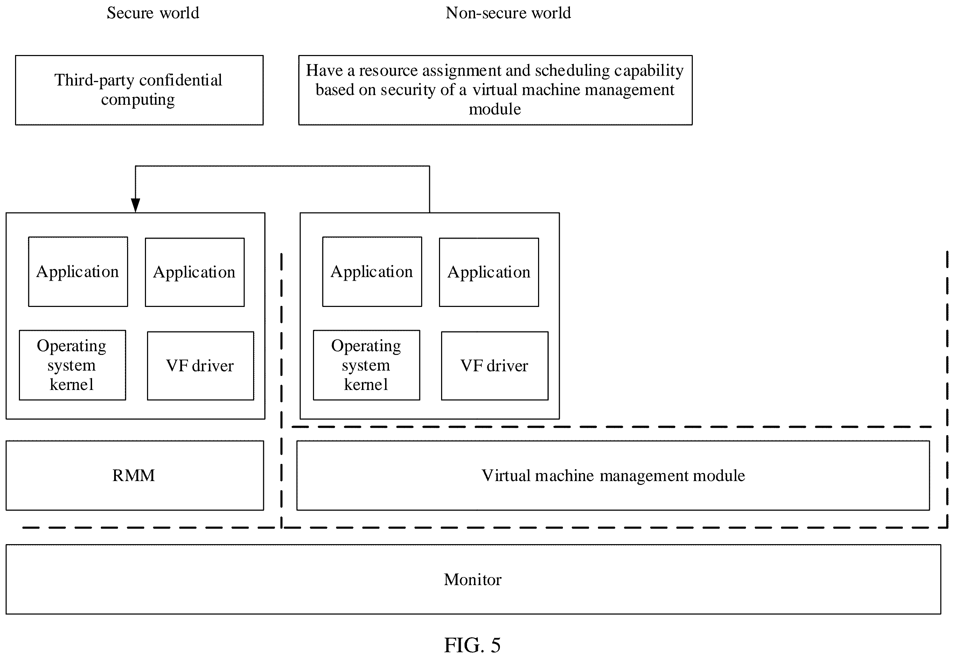

FIG. 5 shows a system architecture to which the device access method is applicable according to an embodiment of this application.

As shown in FIG. 5, a virtual function (virtual function, VF) driver module is granted to a secure world. On this basis, a confidential virtual machine located in a server may deliver a confidential computing task to a secure memory and a secure accelerator in a heterogeneous device by using the VF module. A data channel established between the server and the heterogeneous device cannot be stolen by malware in a non-secure world, so that a confidential computing requirement of a tenant in a heterogeneous computing architecture scenario is met.

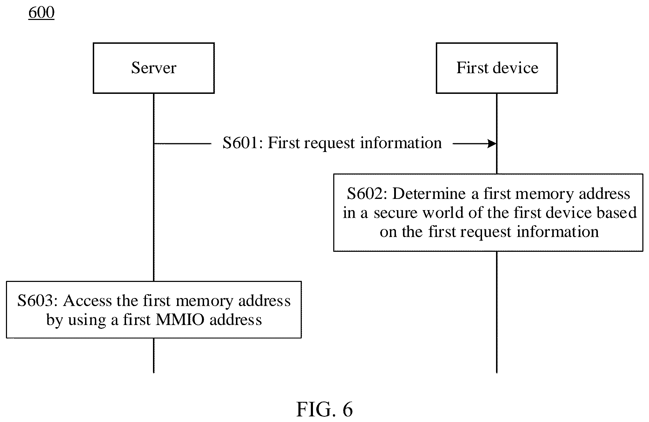

FIG. 6 shows a device access method according to an embodiment of this application. The method 600 may be applied to the architecture shown in FIG. 5, and the method 600 may include the following steps.

S601: A server sends first request information to a first device.

The first request information is used to request the first device to determine a first memory address, and the first memory address corresponds to a first memory mapped input/output MMIO address in a secure world of the server.

Optionally, the first memory address may be a memory address at a granularity of a physical page, or the first memory address may be a memory address at a granularity of a physical memory segment. The first device includes a secure world and a non-secure world, and the server includes a secure world and a non-secure world.

Optionally, the secure world in the server and the secure world in the first device may not be a same secure world. Correspondingly, the non-secure world in the server and the non-secure world in the first device may not be a same non-secure world.

It should be understood that the secure world may also be referred to as a confidential domain or a trusted execution environment in this application, and the non-secure world may also be referred to as a common domain or a non-trusted execution environment in this application. The first device may be referred to as a confidential device or a heterogeneous device (device) in this application, and the server may be referred to as a host (host) in this application.

In an embodiment, before step S601, the method 600 further includes: The server determines the first MMIO address in the secure world of the server.

Optionally, the server may assign a second MMIO address in the non-secure world of the server as the first MMIO address.

Optionally, the first MMIO address and the second MMIO address may be a same memory address, but security attributes of the first MMIO address and the second MMIO address are different.

S602: The first device determines the first memory address in the secure world of the first device based on the first request information.

In an embodiment, the first device may assign a second memory address in the non-secure world of the first device as the first memory address based on the first request information, to facilitate access by the server to the first memory address based on the first MMIO address.

Optionally, the first memory address and the second memory address may be a same memory address, but security attributes of the first memory address and the second memory address are different.

Optionally, assigning the second memory address in the non-secure world of the first device as the first memory address may also be understood as follows: The first device sets a memory attribute of the second memory address to secure, and sets a corresponding page table. For example, the memory attribute of the second memory address may be set to secure in a manner of modifying a tag of a physical address of the second memory address, so that the second memory address is assigned as the first memory address.

In an embodiment, the first memory address is the memory address at the granularity of the physical memory segment, and before the first device assigns the second memory address in the non-secure world of the first device as the first memory address based on the first request information, the method 600 may further include: The first device may partition a memory of the first device in a fixed memory partitioning manner, to obtain the second memory address. In this way, the first device can simply and efficiently obtain the first memory address through assignment, to reduce costs and power consumption of confidential computing in the heterogeneous computing architecture.

For example, when the memory of the first device has a total of 64 GB, the first device may partition the memory in the fixed memory partitioning manner (for example, 8 GB, 16 GB, or 32 GB), and the first device may grant the partitioned memory based on an indication of the first request information. For example, the first request information requests the first device to grant a right to use an 8 GB memory to the secure world of the first device. The first device may partition a 64 GB memory on a per-8 GB basis, and one 8 GB memory obtained through partitioning is granted to the secure world of the first device for use. Before the 8 GB memory obtained through partitioning is granted to the secure world of the first device for use, an address corresponding to the 8 GB memory obtained through partitioning may be referred to as the second memory address; and after the 8 GB memory obtained through partitioning is granted to the secure world of the first device for use, the address corresponding to the 8 GB memory obtained through partitioning may be referred to as the first memory address.

In an embodiment, before step S602, the first device may check validity of the first request information. When the first request information is valid, the first device may determine the first memory address based on the first request information. In this way, the first request information can be prevented from being tampered with, and security of access by the server to the first memory address by using the first MMIO address is ensured.

Optionally, that the first device checks the validity of the first request information includes: The first device checks whether the second memory address has been used by the secure world of the first device. When the second memory address is not used by the secure world of the first device, it is determined that the first request information is valid; otherwise, it is determined that the first request information is invalid.

S603: The server accesses the first memory address by using the first MMIO address.

Optionally, after receiving a response message indicating that the first device obtains the first memory address through assignment, the server may access the first memory address by using the first MMIO address.

In this embodiment of this application, the server may send the first request information to the first device, to request the first device to obtain the first memory address through assignment, and the server may access the first memory address by using the first MMIO address. In this way, a data channel established between the server and the first device cannot be stolen by software in the non-secure world, so that a confidential computing requirement of a tenant in a heterogeneous computing architecture scenario can be met.

The first device may not only assign a security attribute of the memory in the first device based on the request information sent by the server, but also assign a security attribute of an accelerator in the first device based on request information sent by the server.

In an embodiment, the method 600 further includes: The server sends second request information to the first device, where the second request information is used to request the first device to assign one or more accelerators to the secure world of the first device; the first device receives the second request information sent by the server, and the first device assigns the one or more accelerators in the non-secure world of the first device to the secure world of the first device based on the second request information; and the server accesses the one or more accelerators by using the first MMIO address. In this way, the server can deliver a confidential computing task to the one or more accelerators.

Optionally, the first device may assign the one or more accelerators to the secure world of the first device according to a preset rule. For example, the first device includes eight accelerators. The first device may assign, based on an indication of the second request information, one, two, or four of the eight accelerators to the secure world of the first device for use.

Optionally, before the one or more accelerators are assigned to the secure world of the first device, the one or more accelerators may be located in the non-secure world of the first device.

Optionally, after receiving a response message that is sent by the first device and that indicates that the one or more accelerators are assigned, the server may access the one or more accelerators by using the first MMIO address.

It should be understood that the accelerator may include a heterogeneous accelerator. The heterogeneous accelerator may be configured to perform cyclic computing on a part that is of a CPU in the server or the first device and that consumes resources, to save computing resources of the CPU.

In an embodiment, that the first device assigns the one or more accelerators in the non-secure world of the first device to the secure world of the first device based on the second request information includes: The first device checks validity of the second request information; and when the second request information is valid, the first device assigns the one or more accelerators in the non-secure world of the first device to the secure world of the first device based on the second request information. In this way, security of the assigned one or more accelerators can be ensured.

Optionally, that the first device checks the validity of the second request information includes: The first device checks whether the one or more accelerators assigned this time have been used by the secure world of the first device; when the one or more accelerators have been used by the secure world of the first device, it is determined that the second request information is invalid; otherwise, it may be determined that the second request information is valid.

In an embodiment, the method 600 further includes: The first device and the server agree on a session key according to a key agreement protocol, where the session key is used to encrypt or decrypt communication data between the server and the first device; and the first device and the server store the session key. In this way, security of communication between the server and the first device can be further ensured, so that a confidential computing requirement of a tenant in a heterogeneous computing architecture scenario is met.

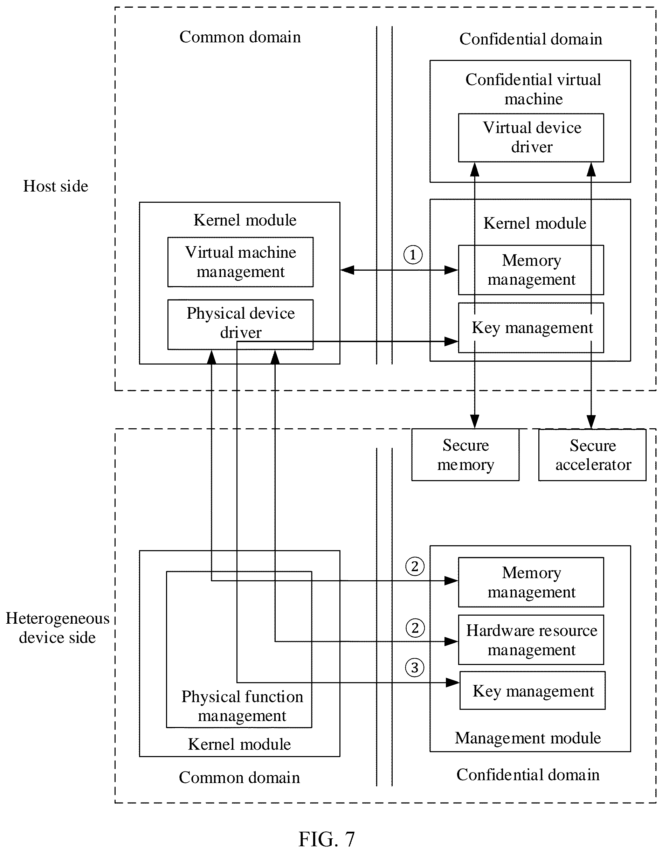

FIG. 7 shows another system architecture to which the device access method is applicable according to an embodiment of this application.

In FIG. 7, a host side may be partitioned into a common domain and a confidential domain, and a confidential virtual machine may be run in the confidential domain. On a heterogeneous device side, security assignment may be performed on a memory attribute and an attribute of a heterogeneous accelerator. A secure memory may be accessed only by a confidential virtual machine on the host side and a secure heterogeneous accelerator.

The common domain may be the non-secure world in the method 600, and the confidential domain may be the secure world in the method 600. The heterogeneous accelerator may be configured to perform cyclic computing on a part that is in a CPU and that consumes resources, to save computing resources of the CPU.

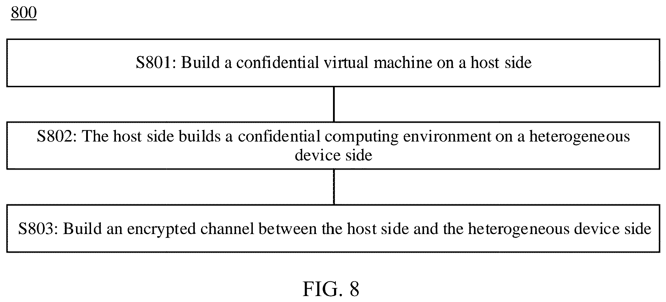

The following describes a device access procedure in detail with reference to a flowchart shown in FIG. 8. The method 800 may be a more specific implementation of the method 600, and the method 800 may include the following steps.

S801: Build a confidential virtual machine on a host side.

Step S801 may correspond to ① in FIG. 7, and step S801 may include the following two substeps.

S801a: After receiving an establishment request of the confidential virtual machine, a virtual machine management module on the host side grants a non-secure memory on the host side to the confidential domain, and a memory management module in the confidential domain may perform validity check on a memory grant request in the establishment request. After the check succeeds, the memory management module may assign a memory attribute of the non-secure memory as secure, and set a corresponding page table. After the memory management module completes all confidential memory assignment and data loading, the confidential virtual machine may be started in the confidential domain on the host side.

For example, that the memory management module performs validity check on the memory grant request may include: checking whether the memory granted this time has been granted, and/or checking whether the memory granted this time has been used by the confidential domain.

It should be understood that the page table may be a special data structure, is stored in a page table area of system space, and stores a correspondence between a logical page and a physical page. The server or the confidential device may translate, by using the page table, a virtual address accessed by the server or the confidential device.

S801b: A confidential domain kernel module on the host side performs integrity measurement on the confidential virtual machine in the confidential domain, where a measurement value may be submitted to a tenant for verification, to ensure that confidential virtual machine code loaded in the confidential domain meets an expectation of the tenant.

Integrity measurement may verify integrity of code and data in the confidential domain. An integrity measurement process may be: generating a signature (measurement value) based on a hash (Hash) value of to-be-detected code and a random number, and then submitting the signature to a third party for verification.

S802: The host side builds a confidential computing environment on a heterogeneous device side.

A host may be the server in the method 600, and a heterogeneous device may be the first device in the method 600. Step S802 may correspond to ② in FIG. 7. Step S802 may include the following four substeps.

S802a: The virtual machine management module on the host side receives an establishment request of a confidential device management module (not shown in FIG. 7), and grants non-secure MMIO address space on the host side to the confidential domain. The memory management module in the confidential domain performs validity check on a memory grant request in the establishment request. After the check succeeds, the memory management module in the confidential domain assigns an attribute of the MMIO address space as secure.

S802b: A physical device driver module on the host side receives the establishment request of the confidential device management module, and the host delivers the memory grant request to the heterogeneous device side. A scheduling module on the host side forwards the memory grant request to a memory management module in a confidential domain on the heterogeneous device side. The memory management module on the heterogeneous device side checks validity of the request. After the check of the request succeeds, the memory management module in the confidential domain on the heterogeneous device side assigns a memory attribute as secure and sets a corresponding page table. The memory grant request may be the first request information in the method 600.

For example, that the memory management module performs validity check on the memory grant request may include: checking whether the memory granted this time has been granted, and/or checking whether the memory granted this time has been used by the common domain.

S802c: The host side delivers an accelerator grant request to the heterogeneous device side, and a scheduling module on the heterogeneous device side forwards the request to a hardware resource management module in the confidential domain on the heterogeneous device side. The hardware resource management module in the confidential domain on the heterogeneous device side checks validity of the request. After the check of the request succeeds, the hardware resource management module in the confidential domain on the heterogeneous device side sets a security attribute of a heterogeneous accelerator to secure. The accelerator grant request may be the second request information in the method 600.

For example, that the hardware resource management performs validity check on the accelerator grant request may include: checking whether the accelerator assigned this time has been assigned to the confidential domain, and/or checking whether the accelerator assigned this time has been used by the common domain.

S802d: The memory management module in the confidential domain on the heterogeneous device side obtains a security configuration (for example, loading code or a register status) on the heterogeneous device side and performs integrity measurement, where a measurement value is submitted to a tenant for verification, to ensure that a configuration in the confidential domain on the heterogeneous device side meets an expectation of the tenant.

S803: Build an encrypted channel between the host side and the heterogeneous device side.

For example, a key management module in the confidential domain on the host side and a key management module in the confidential domain on the heterogeneous device side may agree on a session key according to a key exchange protocol, and the key may be managed and stored by using the key management modules on the host side and the heterogeneous device side.

After steps S801 to S803 are completed, the confidential virtual machine may deliver a confidential computing task to a secure memory and a secure accelerator on the heterogeneous device side by using a virtual device driver module. In addition, it should be noted that in the method 800, step S803 may not be performed. That is, when an attacker sniffs and listens to data in a transmission bus by using physical means, the encrypted channel needs to be enabled. When there is no potential physical attacker, the confidential virtual machine may deliver confidential data in plaintext.

In this embodiment of this application, MMIO address space may be assigned to the confidential domain for use by using a memory space grant mechanism, the confidential virtual machine may access the heterogeneous device by using the assigned MMIO address, and the data channel cannot be stolen by software in the non-secure world, so that a confidential computing requirement of a tenant in a heterogeneous computing architecture scenario is met.

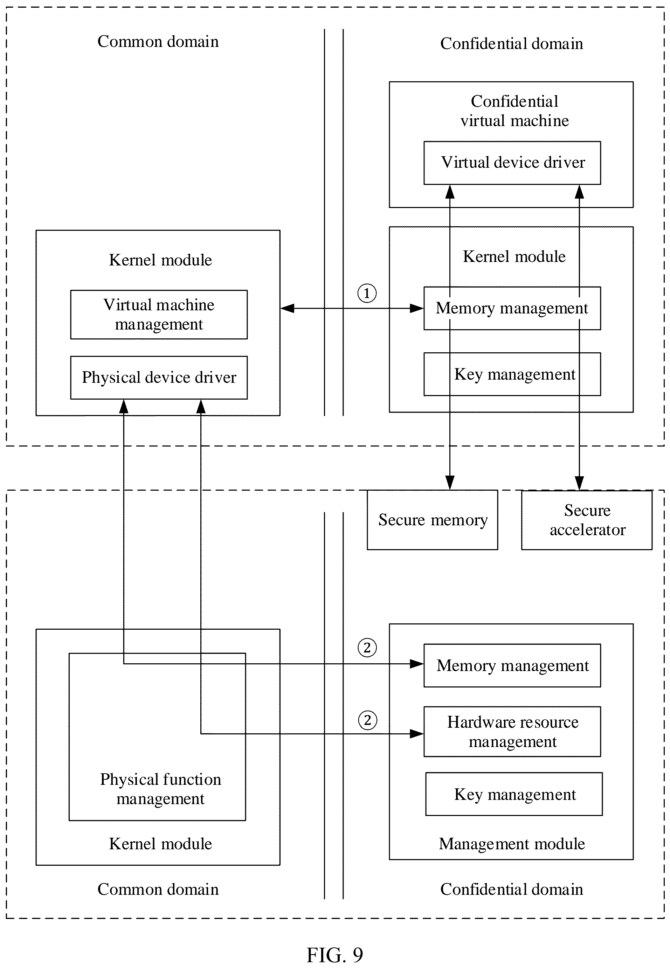

FIG. 9 shows a system architecture to which a computing environment destruction method is applicable according to an embodiment of this application.

In FIG. 9, the host side may be partitioned into the common domain and the confidential domain, and the confidential virtual machine may be run in the confidential domain. On the heterogeneous device side, security assignment may be performed on a memory attribute and an attribute of a heterogeneous accelerator. A secure memory may be accessed only by the confidential virtual machine on the host side and a secure heterogeneous accelerator.

The common domain may be the non-secure world in the method 600, and the confidential domain may be the secure world in the method 600. The heterogeneous accelerator may be configured to perform cyclic computing on the part that is in the CPU and that consumes resources, to save computing resources of the CPU.

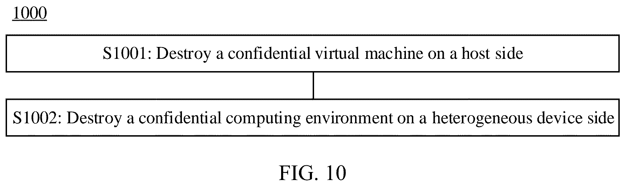

The following describes a method for destroying a confidential computing environment with reference to FIG. 10. The method 1000 may include the following steps.

S1001: Destroy the confidential virtual machine on the host side.

Step S1001 may correspond to ① in FIG. 9.

For example, the virtual machine management module on the host side receives a confidential virtual machine destruction request, and may send a memory grant revocation request to a memory management module in the confidential domain on the host side. The memory management module in the confidential domain may perform validity check on the memory grant revocation request, and check whether the confidential virtual machine is in an inactive (inactive) state currently. That the confidential virtual machine is in the inactive state may be understood as that the confidential virtual machine is in a state in which no task is executed. When the validity check succeeds, and the confidential virtual machine is in the inactive state, the memory management module in the confidential domain on the host side may clear data in a memory and revoke the grant of the memory, and grant the memory to a non-secure world. In this process, if a session key is constructed, the host can also destroy the session key used by the confidential virtual machine.

S1002: Destroy the confidential computing environment on the heterogeneous device side.

Step S1002 corresponds to ② in FIG. 9, and step S1002 may include the following three substeps.

S1002a: After receiving a destruction request of a confidential device management module (not shown in FIG. 9), the virtual machine management module on the host side revokes the grant of the secure MMIO address space on the host side, and grants the space to the common domain. The memory management module in the confidential domain performs validity check on the memory grant revocation request. After the check of the request succeeds, the memory management module in the confidential domain may assign an attribute of the MMIO address space as non-secure.

S1002b: After a physical device driver module on the host side receives the destruction request of the decryption device management module, the host side delivers the memory grant revocation request to the heterogeneous device side. The scheduling module on the heterogeneous device side forwards the request to the memory management module in the confidential domain on the heterogeneous device side. The memory management module in the confidential domain on the heterogeneous device side checks validity of the memory grant revocation request. After the check succeeds, the memory management module in the confidential domain on the heterogeneous device side may clear data in the memory, assign the memory attribute as non-secure, and set a corresponding page table. In this process, if a session key is constructed on the heterogeneous device side, the session key used on the heterogeneous device side may also be destroyed.

S1002c: The host side delivers an accelerator grant revocation request to the heterogeneous device side. The scheduling module on the heterogeneous device side forwards the request to the hardware resource management module in the confidential domain on the heterogeneous device side. The hardware resource management module in the confidential domain on the heterogeneous device side checks validity of the accelerator grant revocation request, and checks whether a heterogeneous accelerator is in an inactive state. That the heterogeneous accelerator is in the inactive state may be understood as that the heterogeneous accelerator is in a state in which no task is executed. If the check of the request succeeds, and the heterogeneous accelerator is in the inactive state, the hardware resource management module in the confidential domain on the heterogeneous device side may clear data in the heterogeneous accelerator, and set a security attribute of the heterogeneous accelerator to be non-secure.

In this embodiment of this application, a memory space grant mechanism may be used, so that a grant of an MMIO address may be revoked, and the address may be granted to the non-secure world, to complete destruction of the built confidential computing environment.

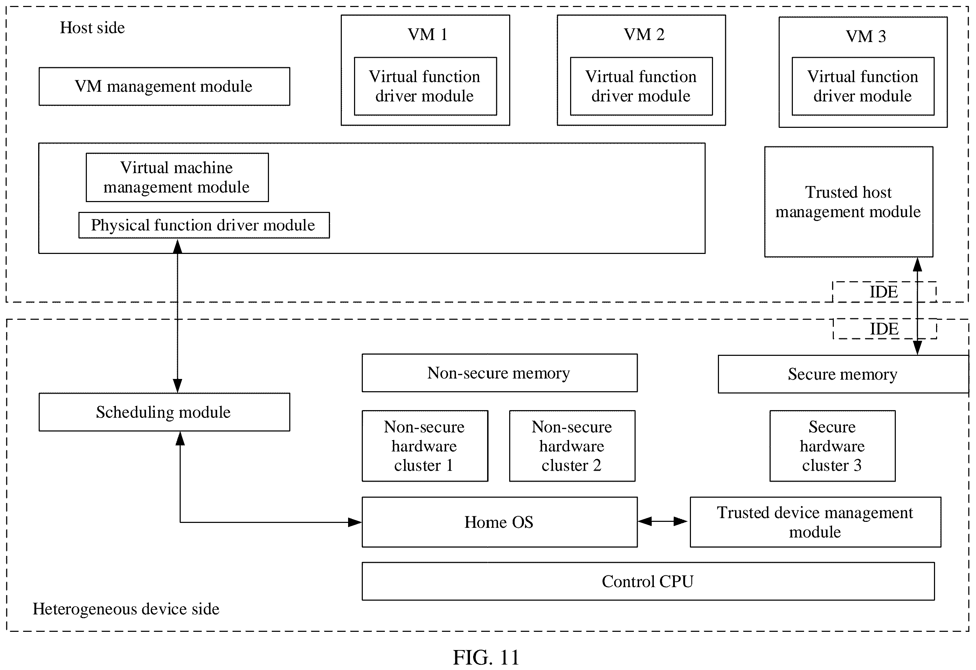

FIG. 11 is a diagram of deploying a control CPU, supporting a grant mechanism, in a heterogeneous device according to an embodiment of this application.

As shown in FIG. 11, the CPU that supports the grant mechanism may be deployed on the heterogeneous device side. To be specific, the CPU supports partitioning of a secure world and a non-secure world, and supports switching, at a granularity of a page (for example, a size of 2 megabytes), of a memory between the secure world and the non-secure world. In this case, a confidential domain management module (including the memory management module and the hardware resource management module) in FIG. 7 may be deployed in the secure world of the CPU, that is, a trusted device management module. The CPU may be referred to as the control CPU.

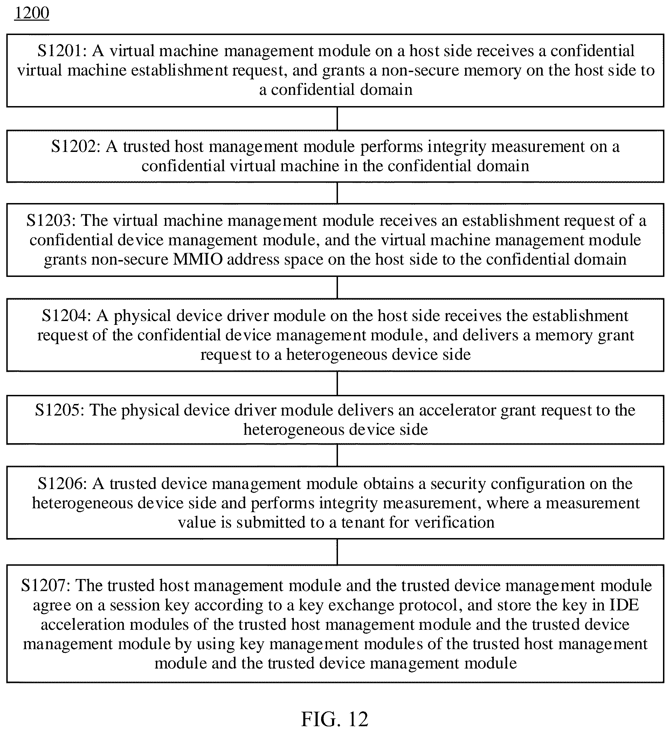

The following uses FIG. 12 as an example to describe a device access procedure. A method 1200 may be a more specific implementation of the method 600 and the method 800. The method 1200 may include the following steps.

S1201: The virtual machine management module on the host side receives a confidential virtual machine establishment request, and grants a non-secure memory on the host side to the confidential domain.

A trusted host management module on the host side performs validity check on a memory grant request in the establishment request. After the check of the request succeeds, the trusted host management module in the confidential domain assigns the memory attribute as secure and sets a corresponding page table. After all required confidential memory assignment and data loading are completed, the confidential virtual machine is started in the confidential domain on the host side.

S1202: The trusted host management module performs integrity measurement on the confidential virtual machine in the confidential domain.

After measurement, a measurement value may be submitted to a tenant for verification, to ensure that confidential virtual machine code loaded in the confidential domain meets an expectation of the tenant.

S1203: The virtual machine management module receives an establishment request of the confidential device management module, and the virtual machine management module grants the non-secure MMIO address space on the host side to the confidential domain.

The trusted host management module may perform validity check on a memory grant request in the establishment request. After the check succeeds, the trusted host management module may assign an attribute of the MMIO address space as secure.

S1204: The physical device driver module on the host side receives the establishment request of the confidential device management module, and delivers the memory grant request to the heterogeneous device side. The memory grant request may be the first request information in the method 600.

The scheduling module on the heterogeneous device side forwards the memory grant request to a non-secure world interface (Home OS) of the control CPU. After receiving the memory grant request, the non-secure world interface Home OS may forward the memory grant request to the trusted device management module. The trusted device management module may assign the memory attribute as secure and set a corresponding page table on the heterogeneous device.

The scheduling module sends the memory grant request to the Home OS of the control CPU and then forwards the memory grant request to the trusted device management module, to simplify management logic. The trusted device management module of the control CPU is newly added based on original device logic. In the original logic, after the scheduling module sends the request to the Home OS, the Home OS may directly manage the memory and the heterogeneous accelerator on the heterogeneous device side. After the trusted device management module in the secure world and security attributes of the memory and the heterogeneous accelerator are added, additional signal processing logic may be added to the Home OS to forward the memory grant request to the trusted device management module. In addition, in consideration of code implementation, adding an additional signal processing program into the Home OS does not excessively increase code complexity. In consideration of security, security of directly sending, by the scheduling module, a signal to the trusted device management module is the same as or similar to security of this forwarding policy, and in both cases, the trusted device management module performs security check on the memory grant request.

S1205: The physical device driver module delivers an accelerator grant request to the heterogeneous device side.

The accelerator grant request may be the second request information in the method 600.

Optionally, the scheduling module on the heterogeneous device side may directly forward the accelerator grant request to the trusted device management module in the confidential domain on the heterogeneous device side.

Optionally, the scheduling module on the heterogeneous device side forwards the accelerator grant request to the non-secure world Home OS of the control CPU. After receiving the accelerator grant request, the non-secure world Home OS of the control CPU may forward the accelerator grant request to the trusted device management module. The trusted device management module may perform validity check on the accelerator grant quest. After the check succeeds, the trusted device management module may assign an attribute of the accelerator as secure. A heterogeneous accelerator whose attribute is assigned as a secure attribute may form a hardware cluster, and the hardware cluster may correspond to assignment of heterogeneous accelerator management logic on the heterogeneous device side.

That the grant request of the heterogeneous accelerator is valid may meet at least one of the following requirements.
(1) When an attribute of a heterogeneous accelerator in a hardware cluster is set to secure, an attribute of another heterogeneous accelerator (including a newly granted heterogeneous accelerator) in the hardware cluster should also be set to secure.
(2) An attribute of a heterogeneous accelerator in a hardware cluster is set to secure. When the trusted device management module receives a request for resetting the heterogeneous accelerator (for example, the grant of the heterogeneous accelerator is revoked, and the heterogeneous accelerator is granted to the non-secure world and is assigned to another hardware cluster), it needs to be ensured that a state of the heterogeneous accelerator is an inactive (inactive) state, that is, no security task is run.
(3) After an attribute of a heterogeneous accelerator is assigned as secure, the heterogeneous accelerator can be assigned to only one hardware cluster.

S1206: The trusted device management module obtains a security configuration on the heterogeneous device side and performs integrity measurement, where a measurement value is submitted to a tenant for verification, to ensure that a configuration in the confidential domain on the heterogeneous device side meets an expectation of the tenant.

Optionally, the security configuration may include: trusted device management code, a register status, and the like.

S1207: The trusted host management module and the trusted device management module agree on a session key according to a key exchange protocol, and store the key in data integrity and confidentiality protection (integrity and data encryption, IDE) acceleration modules of the trusted host management module and the trusted device management module by using key management modules of the trusted host management module and the trusted device management module.

In this embodiment of this application, the CPU supporting the grant mechanism is deployed on the heterogeneous device side, so that the heterogeneous device side can assign the memory and the heterogeneous accelerator at a fine granularity, to facilitate access by the host to the assigned secure memory and the assigned secure accelerator, so as to meet a confidential computing requirement of a tenant in a heterogeneous computing architecture scenario.

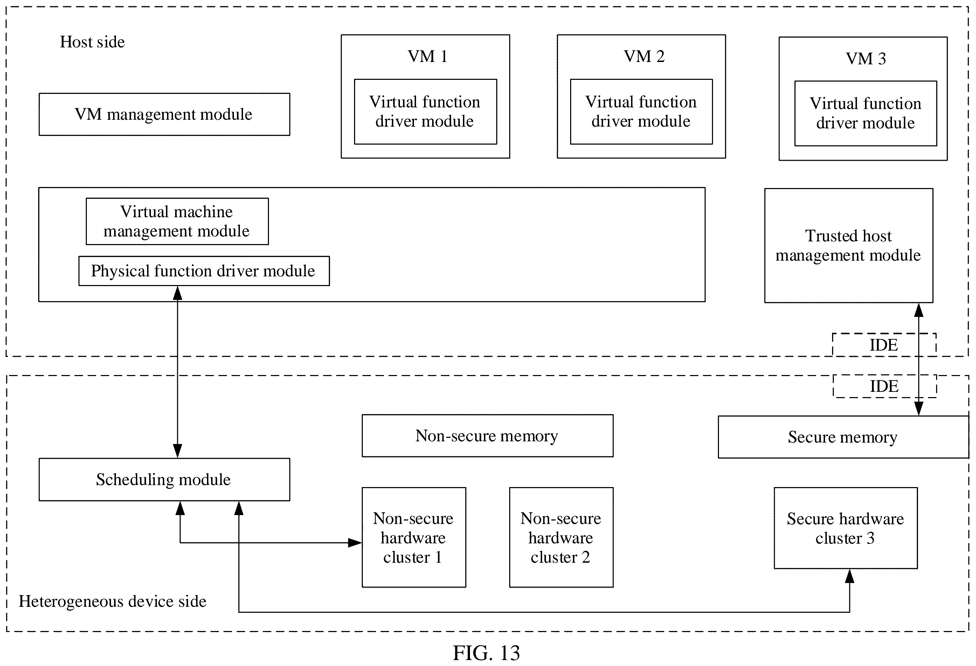

FIG. 13 is a diagram of deploying simple assignment logic in the heterogeneous device according to an embodiment of this application.

As shown in FIG. 13, in some cases, in consideration of costs or power consumption, the control CPU that supports the grant mechanism cannot be deployed on the heterogeneous device side. In this case, the confidential domain management module (including the memory management module and the hardware resource management module) in FIG. 9 may be deployed in the scheduling module on the heterogeneous device side. In specific implementation, the scheduling module may be a CPU having a basic function and is responsible for scheduling, in the heterogeneous device, a computing task delivered by the host side. However, the scheduling module does not have complex functions such as secure world partitioning and memory grant. In another implementation, the scheduling module may be an application-specific integrated circuit (application-specific integrated circuit, ASIC). After receiving the computing task delivered by the host side, the scheduling module may deliver the computing task to the heterogeneous accelerator according to a preset scheduling policy. The CPU on the host side is the CPU that supports the grant mechanism.

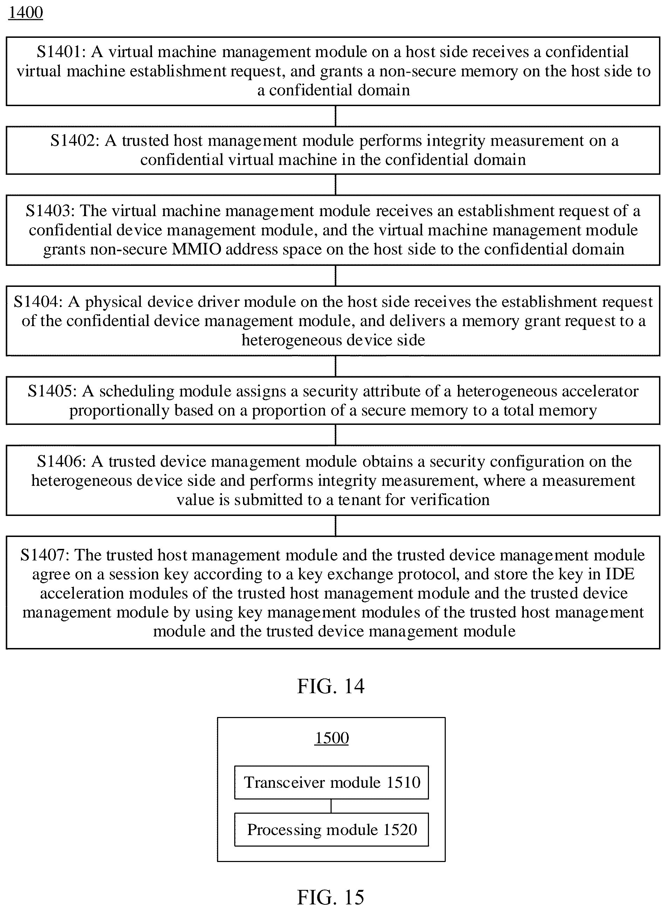

The following uses FIG. 14 as an example to describe a device access procedure. A method 1400 may be a more specific implementation of the method 600 and the method 800. The method 1400 may include the following steps.

S1401: The virtual machine management module on the host side receives the confidential virtual machine establishment request, and grants the non-secure memory on the host side to the confidential domain.

The virtual machine management module on the host side performs validity check on the memory grant request in the establishment request. After the check of the request succeeds, a trusted server management module in the confidential domain assigns the memory attribute as secure and sets a corresponding page table. After all required confidential memory assignment and data loading are completed, the confidential virtual machine is started in the confidential domain on the host side.

S1402: The trusted host management module performs integrity measurement on the confidential virtual machine in the confidential domain.

A measurement value may be submitted to a tenant for verification, to ensure that confidential virtual machine code loaded in the confidential domain meets an expectation of the tenant.

S1403: The virtual machine management module receives the establishment request of the confidential device management module, and the virtual machine management module grants the non-secure MMIO address space on the host side to the confidential domain.

The trusted host management module may perform validity check on the memory grant request. After the check succeeds, the trusted server management module may assign the attribute of the MMIO address space as secure.

S1404: The physical device driver module on the host side receives the establishment request of the confidential device management module, and delivers the memory grant request to the heterogeneous device side. The memory grant request may be the first request information in the method 600.

The scheduling module on the heterogeneous device side partitions the memory at a coarse granularity. For example, when the memory on the heterogeneous device side is 64 GB in total, a memory partitioning method of a fixed size such as 8 GB, 16 GB, or 32 GB may be provided, and the heterogeneous device side may grant, based on an instruction delivered by the physical device driver module on the host side, the memory that is partitioned by using one of the foregoing allocation methods.

S1405: The scheduling module assigns the security attribute of the heterogeneous accelerator proportionally based on a proportion of the secure memory to a total memory.

For example, when the memory on the heterogeneous device side has 64 GB in total and eight vector accelerators, the scheduling module may assign attributes of one, two, or four vector accelerators as secure based on a proportion.

S1406: The trusted device management module obtains a security configuration on the heterogeneous device side and performs integrity measurement, where a measurement value is submitted to a tenant for verification, to ensure that a configuration in the confidential domain on the heterogeneous device side meets an expectation of the tenant.

Optionally, the security configuration may include: trusted device management code, a register status, and the like.

S1407: The trusted host management module and the trusted device management module agree on a session key according to a key exchange protocol, and store the key in IDE acceleration modules of the trusted host management module and the trusted device management module by using key management modules of the trusted host management module and the trusted device management module.

In this embodiment of this application, the heterogeneous device side may assign the memory and the heterogeneous accelerator at a coarse granularity, to facilitate access by the host to the assigned secure memory and the assigned secure heterogeneous accelerator. In this way, the secure memory and the secure heterogeneous accelerator can be simply and efficiently assigned, to reduce costs and power consumption of confidential computing in the heterogeneous computing architecture.

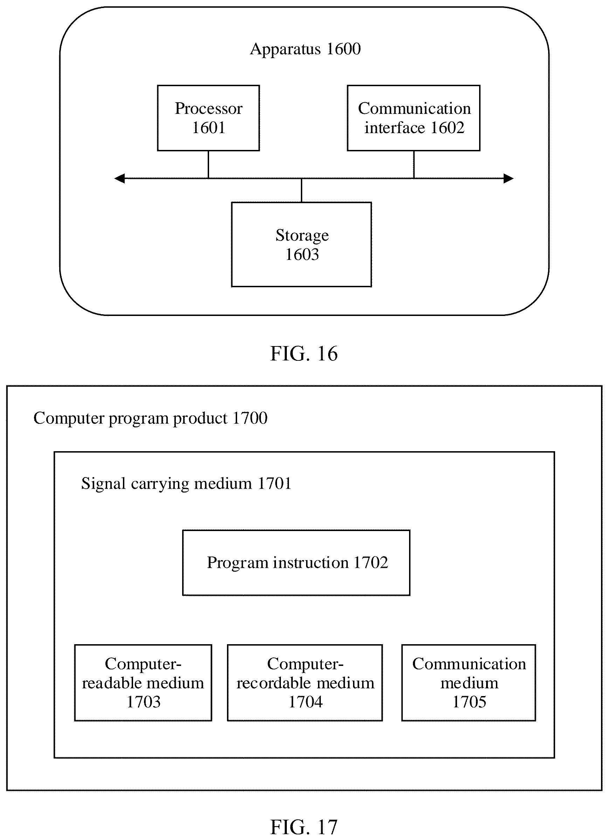

The foregoing describes the device access method according to embodiments of this application. The following separately describes an apparatus and a device according to embodiments of this application with reference to FIG. 15 and FIG. 16.

FIG. 15 is a diagram of an example of a structure of a device access apparatus 1500 according to an embodiment of this application. The device access apparatus includes a transceiver module 1510 and a processing module 1520. The transceiver module 1510 is configured to send and receive instructions and/or data. The transceiver module 1510 may also be referred to as a communication interface or a communication module. The processing module 1520 is configured to process data. Optionally, the apparatus 1500 further includes a storage module. The storage module is configured to implement a corresponding storage function, and store corresponding instructions and/or data. The processing module 1520 may read instructions and/or data in the storage module, so that the apparatus 1500 implements the foregoing device access method.

In a design, the apparatus 1500 may perform an action performed by a first device in the foregoing method embodiment.

The apparatus 1500 includes the transceiver module 1510 and the processing module 1520. The transceiver module 1510 is configured to receive first request information sent by a server, where the first request information is used to request the first device to determine a first memory address, and the first memory address corresponds to a first MMIO address in a secure world of the server. The processing module 1520 is configured to determine the first memory address in a secure world of the first device based on the first request information.

In a possible implementation, the processing module 1520 is specifically configured to assign a second memory address in a non-secure world of the first device as the first memory address based on the first request information.

In a possible implementation, the first memory address is a memory address at a granularity of a physical memory segment; and the processing module 1520 is further configured to partition a memory of the first device in a fixed memory partitioning manner, to obtain the second memory address.

In a possible implementation, the processing module 1520 is specifically configured to: check validity of the first request information; and when the first request information is valid, assign the second memory address in the non-secure world of the first device as the first memory address based on the first request information.

In a possible implementation, the transceiver module 1510 is further configured to receive second request information sent by the server, where the second request information is used to request the first device to assign one or more accelerators to the secure world of the first device; and the processing module 1520 is further configured to assign the one or more accelerators in the non-secure world of the first device to the secure world of the first device based on the second request information.

In a possible implementation, the processing module 1520 is specifically configured to: check validity of the second request information; and when the second request information is valid, assign the one or more accelerators in the non-secure world of the first device to the secure world of the first device based on the second request information.

In a possible implementation, the processing module 1520 is further configured to: agree on a session key with the server according to a key agreement protocol, where the session key is used to encrypt or decrypt communication data between the server and the first device; and store the session key.

In another design, the apparatus 1500 may perform an action performed by the server in the foregoing method embodiment.

The apparatus 1500 includes the transceiver module 1510 and the processing module 1520. The transceiver module 1510 is configured to receive the first request information sent by the server, where the first request information is used to request the first device to determine the first memory address, and the first memory address corresponds to the first MMIO address in the secure world of the server. The processing module 1520 is configured to determine the first memory address in the secure world of the first device based on the first request information.

In a possible implementation, the transceiver module 1510 is further configured to send the second request information to the first device, where the second request information is used to request the first device to assign the one or more accelerators to the secure world of the first device. The processing module 1520 accesses the one or more accelerators by using the first MMIO address.

In a possible implementation, the processing module 1520 is specifically configured to assign a second MMIO address in the non-secure world of the server as the first MMIO address.

In a possible implementation, the processing module 1520 is further configured to: agree on the session key with the first device according to the key agreement protocol, where the session key is used to encrypt or decrypt the communication data between the server and the first device; and store the session key.

An embodiment of this application further provides a computer storage medium. The computer storage medium stores program instructions. When the program is executed, some or all of steps of the device access method in embodiments corresponding to FIG. 6, FIG. 8, FIG. 10, FIG. 12, and FIG. 14 may be included.

FIG. 16 is a diagram of an example of a structure of another device access apparatus 1600 according to an embodiment of this application. The apparatus 1600 includes a processor 1601, a communication interface 1602, and a storage 1603. An example of the apparatus 1600 is a chip. Another example of the apparatus 1600 is a computing device.

The method disclosed in the foregoing embodiment of this application may be applied to the processor 1601, or may be implemented by the processor 1601. The processor 1601 may be a CPU, or may be another general-purpose processor, a digital signal processor (digital signal processor, DSP), an ASIC, a field-programmable gate array (field-programmable gate array, FPGA) or another programmable logic device, a discrete gate or transistor logic device, or a discrete hardware component. The general-purpose processor may be a microprocessor, any conventional processor, or the like. In an implementation process, steps of the foregoing methods may be implemented by using an integrated logic circuit of hardware in the processor 1601, or by using instructions in a form of software. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and a software module in the decoding processor.

The storage 1603 may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that memories of the systems and methods described in this specification include but are not limited to these and any memory of another appropriate type.

The processor 1601, the storage 1603, and the communication interface 1602 may communicate with each other through a bus. The storage 1603 stores executable code. The processor 1601 reads executable code in the storage 1603 to perform a corresponding method. The storage 1603 may further include another software module required for running a process, such as an operating system. The operating system may be LINUX^{™}, UNIX^{™}, WINDOWS^{™}, or the like.

For example, the executable code in the storage 1603 is used to implement the methods shown in FIG. 6, FIG. 8, FIG. 10, FIG. 12, and FIG. 14, and the processor 1601 reads the executable code in the storage 1603 to perform the methods shown in FIG. 6, FIG. 8, FIG. 10, FIG. 12, and FIG. 14.

In some embodiments of this application, the disclosed methods may be implemented as computer program instructions encoded on a computer-readable storage medium or encoded on another non-transitory medium or product in a machine-readable format.

FIG. 17 schematically shows a conceptual partial view of an example computer program product arranged according to at least some embodiments shown herein. The example computer program product includes a computer program for executing a computer process on a computing device. In an embodiment, an example computer program product 1700 is provided by using a signal carrying medium 1701. The signal carrying medium 1701 may include one or more program instructions 1702 that may provide the foregoing functions or some functions described for the methods shown in FIG. 6, FIG. 8, FIG. 10, FIG. 12, and FIG. 14 when being run by one or more processors. Therefore, for example, refer to embodiments shown in FIG. 6, FIG. 8, FIG. 10, FIG. 12, and FIG. 14, one or more features may be borne by one or more instructions associated with the signal carrying medium 1701.

In some examples, the signal carrying medium 1701 may include a computer-readable medium 1703, for example but not limited to, a hard drive, a compact disk (CD), a digital video disc (DVD), a digital tape, a storage, a read-only memory (read-only memory, ROM), a random access memory (random access memory, RAM), or the like. In some implementations, the signal carrying medium 1701 may include a computer-recordable medium 1704, for example but not limited to, a storage, a read/write (R/W) CD, or an R/W DVD. In some implementations, the signal carrying medium 1701 may include a communication medium 1705, for example but not limited to, digital and/or analog communication medium (for example, an optical fiber, a waveguide, a wired communication link, or a wireless communication link). Therefore, for example, the signal carrying medium 1701 may be conveyed by the communication medium 1705 in a wireless form (for example, a wireless communication medium that complies with the IEEE 802.11 standard or another transmission protocol). The one or more program instructions 1702 may be, for example, a computer-executable instruction or a logic implementation instruction. In some examples, the foregoing computing device may be configured to provide various operations, functions, or actions in response to the program instructions 1702 that are conveyed to the computing device through one or more of the computer-readable medium 1703, the computer-recordable medium 1704, and/or the communication medium 1705. It should be understood that the arrangement described herein is merely used as an example. Therefore, it should be understood by a person skilled in the art that another arrangement and another element (for example, a machine, an interface, a function, an order, or a function group) can be used instead, and some elements may be omitted together based on a desired result. In addition, many of the described elements are functional entities that can be implemented as discrete or distributed components, or implemented in any appropriate combination at any appropriate location in combination with another component.

A person of ordinary skill in the art may be aware that example units and algorithm steps described with reference to embodiments disclosed in this specification may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that may store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device access method, wherein the method is applied to a first device, the first device comprises a secure world and a non-secure world, and the method comprises:
receiving, by the first device, first request information sent by a server, wherein the first request information is used to request the first device to determine a first memory address, and the first memory address corresponds to a first memory mapped input/output MMIO address in a secure world of the server; and
determining, by the first device, the first memory address in the secure world of the first device based on the first request information.

2. The method according to claim 1, wherein determining, by the first device, the first memory address in the secure world of the first device based on the first request information comprises:
assigning, by the first device, a second memory address in the non-secure world of the first device as the first memory address based on the first request information.

3. The method according to claim 2, wherein the first memory address is a memory address at a granularity of a physical memory segment, and before assigning, by the first device, the second memory address in the non-secure world of the first device as the first memory address based on the first request information, the method further comprises:
partitioning, by the first device, a memory of the first device in a fixed memory partitioning manner, to obtain the second memory address.

4. The method according to any one of claims 1 to 3, wherein determining, by the first device, the first memory address in the secure world of the first device based on the first request information comprises:
checking, by the first device, validity of the first request information; and
when the first request information is valid, determining, by the first device, the first memory address based on the first request information.

5. The method according to any one of claims 1 to 4, wherein the method further comprises:
receiving, by the first device, second request information sent by the server, wherein the second request information is used to request the first device to assign one or more accelerators to the secure world of the first device; and
assigning, by the first device, the one or more accelerators in the non-secure world of the first device to the secure world of the first device based on the second request information.

6. The method according to claim 5, wherein assigning, by the first device, the one or more accelerators in the non-secure world of the first device to the secure world of the first device based on the second request information comprises:
checking, by the first device, validity of the second request information; and
when the second request information is valid, assigning, by the first device, the one or more accelerators in the non-secure world of the first device to the secure world of the first device based on the second request information.

7. The method according to any one of claims 1 to 6, wherein the method further comprises:
agreeing, by the first device, on a session key with the server according to a key agreement protocol, wherein the session key is used to encrypt or decrypt communication data between the server and the first device; and
storing, by the first device, the session key.

8. A device access method, wherein the method is applied to a server, the server comprises a secure world and a non-secure world, and the method comprises:
determining, by the server, a first MMIO address in the secure world of the server;
sending, by the server, first request information to a first device, wherein the first request information is used to request the first device to determine a first memory address in a secure world of the first device, and the first memory address corresponds to the first MMIO address; and
accessing, by the server, the first memory address by using the first MMIO address.

9. The method according to claim 8, wherein the method further comprises:
sending, by the server, second request information to the first device, wherein the second request information is used to request the first device to assign one or more accelerators to the secure world of the first device; and
accessing, by the server, the one or more accelerators by using the first MMIO address.

10. The method according to claim 8 or 9, wherein determining, by the server, the first MMIO address comprises:
assigning, by the server, a second MMIO address in the non-secure world of the server as the first MMIO address.

11. The method according to any one of claims 8 to 10, wherein the method further comprises:
agreeing, by the server, on a session key with the first device according to a key agreement protocol, wherein the session key is used to encrypt or decrypt communication data between the server and the first device; and
storing, by the server, the session key.

12. The method according to any one of claims 8 to 11, wherein the first memory address is a memory address at a granularity of a physical page, or the first memory address is a memory address at a granularity of a physical memory segment.

13. A device access apparatus, comprising a module configured to perform the method according to any one of claims 1 to 7.

14. A device access apparatus comprising a module configured to perform the method according to any one of claims 8 to 12.

15. A device access apparatus, comprising a processor, wherein the processor is configured to: be coupled to a storage, and read and execute instructions and/or program code in the storage, to perform the method according to any one of claims 1 to 7.

16. A device access apparatus, comprising a processor, wherein the processor is configured to: be coupled to a storage, and read and execute instructions and/or program code in the storage, to perform the method according to any one of claims 8 to 12.

17. A chip system, comprising a logic circuit, wherein the logic circuit is configured to: be coupled to an input/output interface, and transmit data through the input/output interface, to perform the method according to any one of claims 1 to 12.

18. A computer-readable medium, wherein the computer-readable medium stores program code, and when the computer program code is run on a computer, the computer is enabled to perform the method according to any one of claims 1 to 12.
